# FASCICULE DE BREVET EUROPEEN

(11) **EP 3 902 696 B1**
(45) Date de publication et mention de la délivrance du brevet: **01.05.2024**
(21) Numéro de dépôt: 19829050.4
(22) Date de dépôt: 13.12.2019
(51) Int. Cl.: B60K 1/04

(54) **STRUCTURE AUTOMOBILE**
KRAFTFAHRZEUGSTRUKTUR
MOTOR VEHICLE STRUCTURE

(30) Priorité: 26.12.2018 FR 1874186
(43) Date de publication de la demande: 03.11.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: AMAANAN, Sofiane, 78180 Montigny le Bretonneux (FR); ZHANG, Charles, 78280 Guyancourt (FR)
(74) Mandataire: Renault Group
(86) Numéro de dépôt international: PCT/EP2019/085041
(87) Numéro de publication internationale: WO 2020/136021

(56) Documents cités:
- EP-A1- 2 610 943
- WO-A1-2018/015269
- DE-A1-102015 111 749
- US-A1- 2013 153 317

## Description

L'invention concerne une structure de véhicule automobile. L'invention concerne également un véhicule comprenant une telle structure et un procédé d'assemblage d'une telle structure.

Les véhicules et notamment les véhicules automobiles sont soumis à des vibrations. Afin d'améliorer le confort de ces véhicules, il est nécessaire de réduire ces vibrations qui engendrent notamment des bruits.

On connaît le document US2008/136110A1 décrivant un système d'isolation sonore entre le plancher du véhicule et le réservoir d'énergie, qu'il s'agisse d'un réservoir de carburant ou d'un bac de batterie. L'espace entre le réservoir de carburant et le plancher est isolé par un joint acoustique de manière à empêcher la transmission du bruit dans l'espace vide scellé.

Toutefois, cette solution fourni une isolation partielle contre les bruits mais ne fournit pas une isolation contre les vibrations.

Le document US 2013/153317 A1 décrit par ailleurs une structure de véhicule électrique comprenant un plancher, un bac à batterie fixé sous le plancher et une plaque de mousse comprimée disposée entre le bac à batterie et le plancher.

Le but de l'invention est de fournir une structure de véhicule remédiant aux inconvénients ci-dessus. En particulier, l'invention permet de réaliser une structure de véhicule qui soit simple et facile à mettre en oeuvre et qui permettent une isolation contre le bruit et les vibrations du plancher d'un véhicule.

L'invention concerne une structure de véhicule électrique ou hybride comprenant un plancher, un bac à batterie fixé sous le plancher, et une plaque de mousse comprimée disposée entre le bac à batterie et le plancher.

Selon l'invention, la surface de la plaque de mousse comprend des perforations microscopiques configurées pour l'évacuation d'air contenu dans la mousse lors de la compression de la plaque et/ou configurées pour éviter l'entrée d'eau dans la mousse.

Dans un mode de réalisation, la plaque de mousse comprend en outre un trou débouchant sur une de ses faces ou la traversant d'une face à l'autre, configuré pour l'évacuation d'air contenu dans la mousse lors de la compression de la plaque.

Dans un mode de réalisation, la plaque de mousse comprend en outre une portion positionnée vers l'arrière du véhicule dont la surface comprend des trous configurés pour l'évacuation d'air contenu dans la mousse lors de la compression de la plaque.

Dans un mode de réalisation, la plaque de mousse est comprimée entre le plancher et le bac à batterie selon un taux de compression compris entre 20% inclus et 40% inclus, notamment entre 30% inclus et 40% inclus.

Dans un mode de réalisation, l'épaisseur de la plaque de mousse comprimée est comprise entre 10 mm inclus et 20 mm inclus, de préférence entre 13 mm inclus et 14 mm inclus, notamment égale ou sensiblement égale à 13 mm avec un taux de compression de 30% de la plaque.

Dans un mode de réalisation, la plaque de mousse comprend une mousse polyuréthane.

Dans un mode de réalisation, la mousse est une mousse à alvéoles ayant des dimensions inférieures à 2 mm.

L'invention concerne aussi un véhicule, notamment véhicule automobile électrique ou véhicule hybride, comprenant une structure selon l'invention.

L'invention concerne enfin un procédé d'assemblage d'une structure de véhicule comprenant une étape de perforation d'une plaque de mousse, une étape de disposition de la plaque de mousse entre un plancher de véhicule et un bac à batterie de véhicule, une étape de compression de ladite plaque de mousse à un taux de compression compris entre 20% et 40% et une étape de fixation du bac à batterie au plancher de manière à ce que la plaque de mousse reste comprimé à un taux de compression compris entre 20% et 40%.

Les dessins annexés représentent, à titre d'exemple, un mode de réalisation d'une structure de véhicule selon l'invention.
[Fig. 1] La figure 1 représente une structure de véhicule.
[Fig. 2] La figure 2 représente une structure de véhicule.
[Fig. 3A] La figure 3A représente une plaque de mousse vu de dessus selon un premier mode de réalisation optimisant l'évacuation de l'air.
[Fig. 3B] La figure 3B représente une plaque de mousse vu de dessus selon un deuxième mode de réalisation optimisant l'évacuation de l'air.
[Fig. 3C] La figure 3C représente une plaque de mousse vu de dessus selon un troisième mode de réalisation optimisant l'évacuation de l'air.
[Fig. 4] La figure 4 est une vue éclatée d'une structure de véhicule selon un mode de réalisation de l'invention.

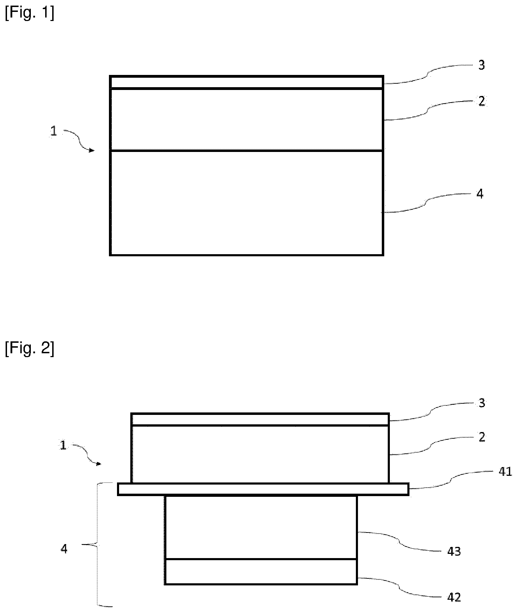

Un exemple d'une structure de véhicule selon un mode de réalisation de l'invention est décrit ci-après en référence à la figure 1.

La structure 1 comprend un plancher 3 de véhicule, et un bac à batterie 4. Le bac à batterie 4 est fixé au plancher 3. En particulier, le bac à batterie est fixé en dessous du plancher 3. Par « en-dessous », on entend ici que le bac à batterie 4 est en dessous du plancher 3 lorsque le véhicule comprenant la structure est en position de fonctionnement. Le bac à batterie 4 est donc de préférence destiné à être disposé à l'extérieur de l'habitacle du véhicule.

La structure 1 de véhicule comprend également une plaque 2 de mousse. La plaque 2 de mousse est disposée entre le bac à batterie 4 et le plancher 3 de la structure 1 de véhicule.

Le plancher 3 constitue avantageusement une plate-forme horizontale de l'habitacle du véhicule.

Le plancher 3 ne se limite pas à la première couche à l'intérieur de l'habitacle du véhicule mais peut comprendre plusieurs couches ou un assemblage dont au moins une couche est disposée à la surface intérieure du véhicule.

Le bac à batterie 4 peut comprendre au moins une portion de forme parallélépipédique ou sensiblement parallélépipédique.

Comme illustré sur la figure 2, le bac à batterie 4 comprend une batterie 43. La batterie 43 est préférentiellement électriquement connectée à un moteur électrique d'entraînement du véhicule. Dans un mode de réalisation, le bac à batterie 4 comprend un système de refroidissement 42. Le système de refroidissement 42 est préférentiellement disposé en dessous de la batterie 43.

Le bac à batterie 4 comprend également un casier ou une enveloppe destinée à contenir la batterie et le système de refroidissement. Un côté supérieur 41 du casier est en contact avec la plaque 2 de mousse ou est orientée vers la plaque 2 de mousse.

La plaque 2 de mousse comprend une largeur et une longueur significativement supérieures à l'épaisseur de ladite plaque 2 de mousse.

La plaque 2 de mousse comprend donc préférentiellement deux faces principales séparées par une dimension inférieure, appelée épaisseur.

Par « significativement supérieur », on entend que la largeur et la longueur sont au moins 10 fois supérieur à l'épaisseur, de préférence au moins 50 fois.

La plaque 2 de mousse est une plaque 2 de mousse solide. La plaque 2 de mousse comprend un matériau poreux ou à alvéoles. Le matériau poreux comprend une matrice solide à géométrie fine saturée par un fluide. Le matériau poreux comprend préférentiellement un réseau continu solide dans lequel sont piégées des bulles d'air.

Préférentiellement, la plaque 2 de mousse comprend une mousse polymère.

La mousse polymère permet avantageusement d'obtenir une plaque 2 de mousse.

Préférentiellement, la plaque 2 de mousse comprend une matrice polymère, très préférentiellement une matrice polyuréthane.

La plaque 2 de mousse peut comprendre des composés ignifuges. Ainsi, la plaque 2 de mousse peut également servir de barrière anti-feu entre le bac à batterie 4 et le plancher 3 de la structure 1 du véhicule.

Le matériau poreux ou à alvéoles peut être défini par sa densité et par la structure de la matrice, notamment par sa porosité et par la forme de ses cellules ou alvéoles.

Le facteur de perte (ou module d'amortissement interne) du matériau poreux peut être compris entre 0,1 et 0,3 à une fréquence de 10Hz et à une température de 23°C. Le facteur de perte est un e mesure du rapport de l'énergie dissipée par amortissement à l'énergie élastique conservée puis restituée durant un cycle de déformation.

Le facteur de perte est égal à la tangente du rapport entre le module de perte sur le module de conservation (E').

Le module de conservation en compression (E') du matériau poreux peut être compris entre 1000 et 50 000 Pa à une fréquence de 10Hz et à une température de 23°C.

La masse volumique du matériau poreux peut être comprise entre 20 et 100 g/L.

Préférentiellement, la plaque 2 de mousse comprend un matériau microporeux, c'est-à-dire que la taille des cellules ou alvéoles du réseau est comprise entre 1 µm et 1 mm.

Dans un mode de réalisation, la mousse est une mousse à alvéoles et les alvéoles ont des dimensions inférieures à 2 mm.

La plaque 2 de mousse disposée entre le plancher 3 et le bac à batterie 4 est comprimée ou précontrainte. En effet, une compression de la plaque 2 de mousse permet avantageusement une meilleure absorption des vibrations du plancher 3 et des bruits. La compression augmente la rigidité de la plaque.

Dans un mode de réalisation, la plaque 2 de mousse est comprimée par des forces orthogonales aux deux faces principales ou est comprimée de manière à diminuer l'épaisseur de la plaque 2 de mousse.

Le bac à batterie 4 peut être mécaniquement fixé au plancher 3 de manière à laisser un espace (entre le bac à batterie et le plancher 3) inférieur à l'épaisseur de la plaque 2 de mousse au repos, c'est-à-dire en l'absence de contrainte exercée sur la plaque. De cette manière, la plaque 2 de mousse est déformée lors du montage par la compression fournie par le plancher 3 et le côté supérieur 41 du bac à batterie 4.

La structure de véhicule peut comprendre des moyens de fixations de manière à pouvoir fixer le bac à batterie 4 au plancher 3. Ces moyens de fixations permettent préférentiellement une fixation sans traverser la plaque 2 de mousse.

Dans un mode de réalisation, le taux de compression de la plaque 2 de mousse est compris entre 20% et 60%. Préférentiellement le taux de compression de la plaque 2 de mousse est d'environ 30%. Par « taux de compression », on entend le rapport de la différence entre l'épaisseur de la plaque 2 de mousse au repos et l'épaisseur de la plaque 2 de mousse comprimée divisée par l'épaisseur de la plaque 2 de mousse au repos.

La plaque 2 de mousse peut comprendre une épaisseur comprise entre 10 mm et 20 mm quand elle est comprimée entre le plancher 3 et le bac à batterie 4. Préférentiellement, la plaque 2 de mousse comprend une épaisseur d'environ 20 mm au repos. Une fois la structure montée, ladite plaque 2 de mousse est comprimée d'environ 30%. Ainsi, l'épaisseur de la plaque 2 de mousse une fois comprimée et montée entre le plancher 3 et le bac à batterie 4 est d'environ 13 mm.

La plaque 2 de mousse comprend également des moyens d'évacuation de l'air compris dans la matrice solide. Ces moyens d'évacuation de l'air permettent d'évacuer l'air hors de la plaque 2 de mousse lors de sa compression. Cette évacuation d'air permet de réduire le risque d'éclatement de la plaque 2 lors de la compression à cause de la surpression d'air.

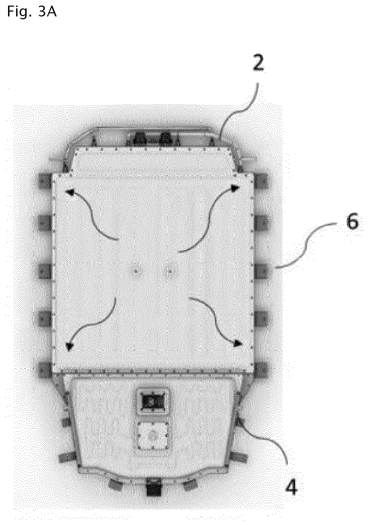

Dans un premier mode de réalisation illustré sur la figure 3A, au moins une surface de la plaque 2 de mousse comprend des microperforations. La surface comprenant les microperforations est préférentiellement une surface supérieure de la plaque 2 de mousse. L'évacuation de l'air n'est alors pas gênée par la surface du plancher 3 ou du bac à batterie 4.

Les microperforations s'étendent sur une portion du volume de la plaque 2 de mousse. Ainsi, l'air piégé dans le réseau de la matrice de solide peut plus facilement sortir de ladite matrice en passant par ces perforations.

Les microperforations peuvent avoir une épaisseur ou un diamètre compris entre 0,05 mm et 3 mm. Les microperforations peuvent s'étendre dans le volume de la plaque 2 de mousse sur une longueur comprise entre 20 % et 99% de la longueur ou de la largeur de la plaque 2 de mousse.

Dans un mode de réalisation, au moins une microperforations traversant de part en part la plaque 2 de mousse sur sa longueur ou sur sa largeur.

La plaque 2 de mousse peut comprendre une densité de microperforations comprise entre 2 et 10 microperforations par mm², préférentiellement entre 2 et 6 microperforations par mm².

Ces caractéristiques des microperforations autorisent avantageusement une meilleure évacuation de l'air contenu dans la mousse lors de la compression de la plaque et permet d'empêcher l'entrée d'eau dans la mousse.

La microperforation peut être positionnée sur les deux faces de la plaque 2, préférentiellement une seule des deux faces est microperforée, cette face doit être positionnée sur la surface supérieur de la plaque 2, soit, vers l'habitacle du véhicule (en contact avec le plancher de la structure automobile).

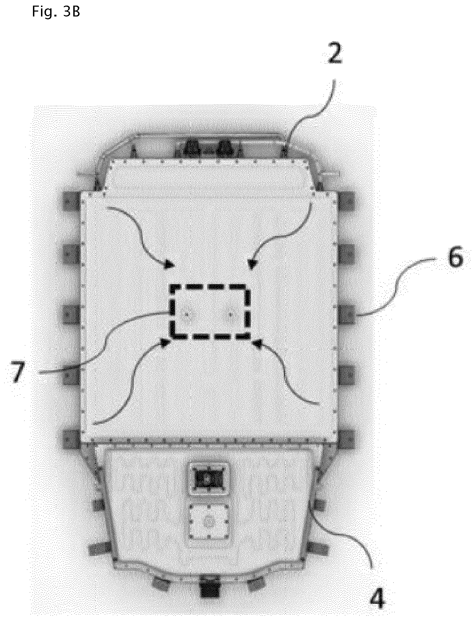

Dans un deuxième mode de réalisation illustré sur la figure 3B, la plaque 2 de mousse comprend au moins un trou débouchant 7 sur au moins une face principale, notamment un trou 7 traversant l'épaisseur de la plaque. Le trou débouchant 7 permet de raccourcir la distance minimum à parcourir pour l'air pour sortir de la plaque 2 de mousse.

Si la plaque 2 de mousse comprend un seul trou débouchant 7, ledit trou débouchant 7 est préférentiellement localisé dans une zone centrale de la plaque 2 de mousse.

Dans un mode de réalisation, l'aire de l'orifice du trou débouchant 7 est inférieure à 5% ou inférieure à 1% de l'aire de la plaque 2 de mousse destinée à venir en contact contre le bac à batterie 4 ou de l'aire de de la plaque 2 de mousse destinée à venir en contact contre le plancher 3.

Dans le mode de réalisation où la plaque 2 de mousse comprend plusieurs trous débouchant 7, la somme des aires des orifices des trous débouchant 7 est inférieure à 20% ou inférieure à 10 % de l'aire de la plaque 2 de mousse destinée à venir en contact contre le bac à batterie 4 ou de l'aire de de la plaque 2 de mousse destinée à venir en contact contre le plancher 3.

Le deuxième mode de réalisation décrit ci-dessus peut également être combiné au premier mode de réalisation.

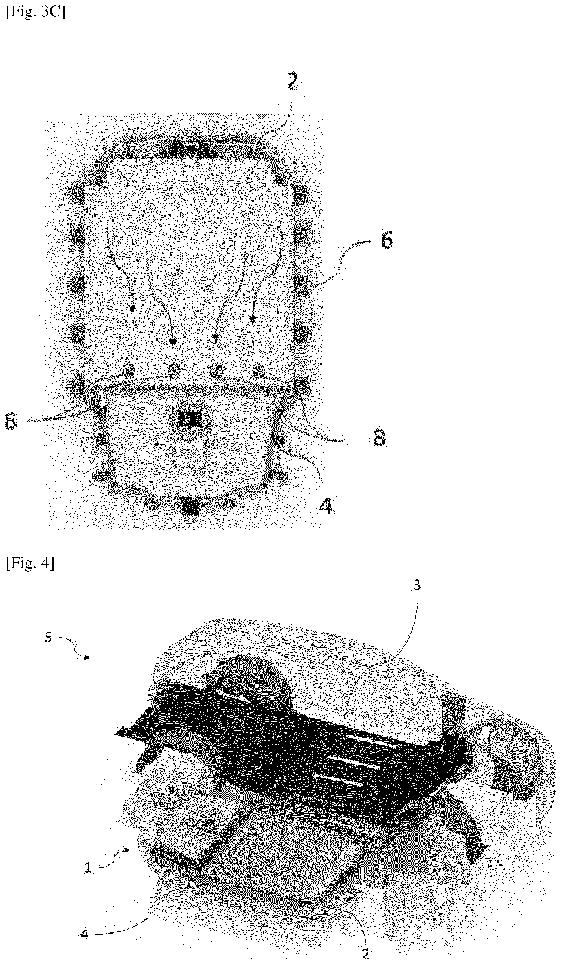

Dans un troisième mode de réalisation illustré figure 3C, compatible avec le premier et/ou le deuxième mode de réalisation, la plaque 2 de mousse comprend une portion localisée vers l'arrière du véhicule dont la surface comprend des trous 8 pour l'évacuation de l'air.

En effet, le positionnement des trous 8 de diamètre plus important en zone arrière permet d'évacuer un volume d'air plus important. Cette solution est particulièrement efficace dans le cas où les microperforations ne permettent pas d'évacuer un volume d'air suffisamment important dans un temps relativement court La zone arrière, à l'opposé du sens de la marche du véhicule, est moins sollicitée en termes de durabilité.

Le risque d'une surpression d'air au coeur de la matrice est ainsi limité.

Ainsi, l'assemblage comprenant le bac à batterie 4 et la plaque 2 de mousse sous le plancher 3 créer un effet masse-ressort-masse.

Les vibrations dans la paroi du bac à batterie 4 et les ondes sonores sont amorties dans le ressort (la plaque 2 de mousse). Finalement, le son et les vibrations sont amortis.

Dans un mode de réalisation, le bac à batterie 4 comprend au moins une zone de fixation 6. L'au moins une zone de fixation 6 peut s'étendre latéralement par rapport au côté supérieur 41.

Le côté supérieur 41 peut être agencé de manière à laisser un espace (entre le bac à batterie 4 et le plancher 3) pour l'insertion de la plaque 2 de mousse comme décrit ci-dessus.

L'au moins une zone de fixation 6 peut comprendre des moyens de fixations telle que des alésages ou des trous taraudés pour la fixation de bac à batterie 4 au plancher 3.

L'invention concerne également un véhicule comprenant une telle structure 1. Le véhicule est préférentiellement un véhicule automobile, très préférentiellement un véhicule automobile comprenant un moteur électrique d'entraînement du véhicule.

L'invention concerne également un procédé d'assemblage d'une structure 1 de véhicule. Un mode d'exécution d'un procédé d'assemblage est décrit ci-après. La structure 1 de véhicule est préférentiellement une structure 1 de véhicule telle que décrite précédemment.

Le procédé comprend les étapes suivantes :
- la disposition d'une plaque 2 de mousse entre un plancher 3 de véhicule et un bac à batterie 4 ;
- la compression de ladite plaque 2 de mousse à un taux de compression compris entre 20% et 40% ;
- la fixation du bac à batterie 4 au plancher 3 de manière à ce que le bac à batterie 4 et le plancher 3 soient séparées d'une distance inférieure à l'épaisseur de la plaque 2 de mousse au repos.

Préférentiellement, ladite distance est comprise entre 60% et 80% de l'épaisseur de la plaque 2 de mousse au repos.

Dans un mode de réalisation, les étapes de compression et de fixation sont exécutées en même temps.

Par « environ » suivi d'une valeur numérique, on entend dans la présente demande une plage à plus ou moins 10% de ladite valeur numérique.

## Revendications

1. Structure (1) de véhicule électrique ou hybride comprenant un plancher (3), un bac à batterie (4) fixé sous le plancher (3), et une plaque (2) de mousse comprimée disposée entre le bac à batterie (4) et le plancher (3), structure dans laquelle la surface de la plaque (2) de mousse comprend des perforations microscopiques configurées pour l'évacuation d'air contenu dans la mousse lors de la compression de la plaque et/ou configurées pour éviter l'entrée d'eau dans la mousse.

2. Structure (1) de véhicule selon la revendication 1 dans laquelle la plaque (2) de mousse comprend en outre un trou (7) débouchant sur une de ses faces ou la traversant d'une face à l'autre, configuré pour l'évacuation d'air contenu dans la mousse lors de la compression de la plaque.

3. Structure (1) de véhicule selon la revendication 1 ou 2 dans laquelle la plaque (2) de mousse comprend en outre une portion positionnée vers l'arrière du véhicule dont la surface comprend des trous (8) configurés pour l'évacuation d'air contenu dans la mousse lors de la compression de la plaque.

4. Structure (1) de véhicule selon l'une des revendications précédentes dans laquelle la plaque (2) de mousse est comprimée entre le plancher (3) et le bac à batterie (4) selon un taux de compression compris entre 20% inclus et 40% inclus, notamment entre 30% inclus et 40% inclus.

5. Structure (1) de véhicule selon l'une des revendications précédentes dans laquelle l'épaisseur de la plaque (2) de mousse comprimée est comprise entre 10 mm inclus et 20 mm inclus, de préférence entre 13 mm inclus et 14 mm inclus, notamment égale ou sensiblement égale à 13 mm avec un taux de compression de 30% de la plaque.

6. Structure (1) de véhicule selon l'une des revendications précédentes dans laquelle la plaque (2) de mousse comprend une mousse polyuréthane.

7. Structure (1) de véhicule selon l'une des revendications précédentes dans laquelle la mousse est une mousse à alvéoles ayant des dimensions inférieures à 2 mm.

8. Véhicule (5), notamment véhicule automobile électrique ou véhicule hybride, comprenant une structure (1) selon l'une des revendications précédentes.

9. Procédé d'assemblage d'une structure (1) de véhicule comprenant les étapes suivantes :
- la perforation d'une plaque (2) de mousse de façon à former une plaque de mousse dont la surface comprend des perforations microscopiques configurées pour l'évacuation d'air contenu dans la mousse lors de la compression de la plaque et/ou configurée pour éviter l'entrée d'eau dans la mousse;
- la disposition de la plaque (2) de mousse entre un plancher (3) de véhicule et un bac à batterie (4) de véhicule ;
- la compression de ladite plaque (2) de mousse à un taux de compression compris entre 20% et 40% ;
- la fixation du bac à batterie (4) au plancher (3) de manière à ce que la plaque (2) de mousse reste comprimée à un taux de compression compris entre 20% et 40%.

## Patentansprüche

1. Struktur (1) eines Elektro- oder Hybridfahrzeugs, welche einen Boden (3), einen unter dem Boden (3) befestigten Batteriekasten (4) und eine zusammengedrückte Schaumstoffplatte (2), die zwischen dem Batteriekasten (4) und dem Boden (3) angeordnet ist, umfasst, wobei in dieser Struktur die Oberfläche der Schaumstoffplatte (2) mikroskopische Perforationen umfasst, die für die Abführung von im Schaumstoff enthaltener Luft beim Zusammendrücken der Platte ausgelegt sind und/oder dafür ausgelegt sind, das Eindringen von Wasser in den Schaumstoff zu vermeiden.

2. Fahrzeugstruktur (1) nach Anspruch 1, wobei die Schaumstoffplatte (2) außerdem ein auf einer ihrer Seiten mündendes oder sie von einer Seite zur anderen durchquerendes Loch (7) umfasst, das für die Abführung von im Schaumstoff enthaltener Luft beim Zusammendrücken der Platte ausgelegt ist.

3. Fahrzeugstruktur (1) nach Anspruch 1 oder 2, wobei die Schaumstoffplatte (2) außerdem einen zum hinteren Bereich des Fahrzeugs hin positionierten Abschnitt umfasst, der Löcher (8) umfasst, die für die Abführung von im Schaumstoff enthaltener Luft beim Zusammendrücken der Platte ausgelegt sind.

4. Fahrzeugstruktur (1) nach einem der vorhergehenden Ansprüche, wobei die Schaumstoffplatte (2) zwischen dem Boden (3) und dem Batteriekasten (4) mit einem Kompressionsverhältnis zwischen 20 % (einschließlich) und 40 % (einschließlich), insbesondere zwischen 30 % (einschließlich) und 40 % (einschließlich), zusammengedrückt wird.

5. Fahrzeugstruktur (1) nach einem der vorhergehenden Ansprüche, wobei die Dicke der zusammengedrückten Schaumstoffplatte (2) zwischen 10 mm (einschließlich) und 20 mm (einschließlich), vorzugsweise zwischen 13 mm (einschließlich) und 14 mm (einschließlich) liegt, insbesondere gleich oder im Wesentlichen gleich 13 mm ist, bei einem Kompressionsverhältnis der Platte von 30 %.

6. Fahrzeugstruktur (1) nach einem der vorhergehenden Ansprüche, wobei die Schaumstoffplatte (2) einen Polyurethan-Schaumstoff umfasst.

7. Fahrzeugstruktur (1) nach einem der vorhergehenden Ansprüche, wobei der Schaumstoff ein Schaumstoff mit Zellen ist, die Abmessungen von weniger als 2 mm aufweisen.

8. Fahrzeug (5), insbesondere Elektrokraftfahrzeug oder Hybridfahrzeug, welches eine Struktur (1) nach einem der vorhergehenden Ansprüche umfasst.

9. Verfahren zum Zusammenbau einer Fahrzeugstruktur (1), welches die folgenden Schritte umfasst:
- das Perforieren einer Schaumstoffplatte (2), um eine Schaumstoffplatte zu bilden, deren Oberfläche mikroskopische Perforationen umfasst, die für die Abführung von im Schaumstoff enthaltener Luft beim Zusammendrücken der Platte ausgelegt sind und/oder dafür ausgelegt sind, das Eindringen von Wasser in den Schaumstoff zu vermeiden;
- das Anordnen der Schaumstoffplatte (2) zwischen einem Fahrzeugboden (3) und einem Batteriekasten (4) eines Fahrzeugs;
- das Zusammendrücken der Schaumstoffplatte (2) mit einem Kompressionsverhältnis zwischen 20 % und 40 %;
- das Befestigen des Batteriekastens (4) am Boden (3) derart, dass die Schaumstoffplatte (2) mit einem Kompressionsverhältnis zwischen 20 % und 40 % zusammengedrückt bleibt.

## Claims

1. Electric or hybrid vehicle structure (1) comprising a floor (3), a battery tray (4) fastened beneath the floor (3), and a compressed foam plate (2) disposed between the battery tray (4) and the floor (3), in which structure the surface of the foam plate (2) comprises microscopic perforations configured for evacuating air contained in the foam during the compression of the plate and/or configured to avoid the ingress of water into the foam.

2. Vehicle structure (1) according to Claim 1, wherein the foam plate (2) further comprises a hole (7) opening on one of its faces or passing through it from one face to the other, which is configured for evacuating air contained in the foam during the compression of the plate.

3. Vehicle structure (1) according to Claim 1 or 2, wherein the foam plate (2) further comprises a portion positioned towards the rear of the vehicle, of which the surface comprises holes (8) configured for evacuating air contained in the foam during the compression of the plate.

4. Vehicle structure (1) according to one of the preceding claims, wherein the foam plate (2) is compressed between the floor (3) and the battery tray (4) with a degree of compression of between 20% and 40% inclusive, in particular between 30% and 40% inclusive.

5. Vehicle structure (1) according to one of the preceding claims, wherein the thickness of the foam plate (2) when compressed is between 10 mm and 20 mm inclusive, preferably between 13 mm and 14 mm inclusive, in particular equal or substantially equal to 13 mm, with a degree of compression of 30% of the plate.

6. Vehicle structure (1) according to one of the preceding claims, wherein the foam plate (2) comprises a polyurethane foam.

7. Vehicle structure (1) according to one of the preceding claims, wherein the foam is a foam with cells having dimensions smaller than 2 mm.

8. Vehicle (5), in particular an electric motor vehicle or hybrid vehicle, comprising a structure (1) according to one of the preceding claims.

9. Method for assembling a vehicle structure (1), comprising the following steps:
- perforating a foam plate (2) so as to form a foam plate of which the surface comprises microscopic perforations configured for evacuating air contained in the foam during the compression of the plate and/or configured to avoid the ingress of water into the foam;
- disposing the foam plate (2) between a vehicle floor (3) and a vehicle battery tray (4);
- compressing said foam plate (2) with a degree of compression of between 20% and 40%;
- fastening the battery tray (4) to the floor (3) such that the foam plate (2) remains compressed with a degree of compression of between 20% and 40%.
